# EUROPÄISCHE PATENTSCHRIFT

(11) **EP 3 233 413 B1**
(45) Veröffentlichungstag und Bekanntmachung des Hinweises auf die Patenterteilung: **21.07.2021**
(21) Anmeldenummer: 15820828.0
(22) Anmeldetag: 16.12.2015
(51) Int. Cl.: B29C 45/56, B29C 45/14, B29C 45/37, B29C 33/36, H01B 13/14, H04R 1/10, H01B 7/00, H01B 13/24, B29C 48/00, B29C 48/15, B29C 48/30, B29C 48/05, B29C 48/25

(54) **VERFAHREN ZUR HERSTELLUNG EINER ELEKTRISCHEN LEITUNG UND WERKZEUGFORM FÜR EIN SOLCHES VERFAHREN**
METHOD FOR PRODUCING AN ELECTRICAL LINE AND TOOL MOULD FOR SUCH A METHOD
PROCÉDÉ DE FABRICATION D'UNE LIGNE ÉLECTRIQUE ET MOULE D'OUTIL APPROPRIÉ POUR UN TEL PROCÉDÉ

(30) Priorität: 17.12.2014 DE 102014226335
(43) Veröffentlichungstag der Anmeldung: 25.10.2017
(73) Patentinhaber: LEONI Kabel GmbH, 91154 Roth (DE)
(72) Erfinder: STADLER, Wolfgang, 91161 Hilpoltstein (DE); WENZEL, Jörg, 91154 Roth (DE)
(74) Vertreter: FDST Patentanwälte
(86) Internationale Anmeldenummer: PCT/EP2015/080040
(87) Internationale Veröffentlichungsnummer: WO 2016/097012

(56) Entgegenhaltungen:
- EP-A1- 0 865 130
- EP-A1- 1 882 574
- EP-A1- 2 187 491
- DE-A1- 2 338 186
- DE-C- 823 606
- DE-C- 922 241
- US-A- 3 323 167
- US-A1- 2011 180 302
- US-A1- 2011 180 321
- None

## Beschreibung

Die Erfindung betrifft ein Verfahren zur Herstellung einer sich in einer Leitungslängsrichtung erstreckenden insbesondere elektrischen Leitung mit einem Leitungskern und mit einem diesen umgebenden Außenmantel. Desweiteren betrifft die Erfindung eine eine Werkzeugform, die bei dem Verfahren verwendet wird.

Der Außenmantel bei derartigen elektrischen Leitungen wird üblicherweise durch ein Formgebungsverfahren aus einer erstarrbaren, beim Herstellungsprozess plastischen Masse ausgebildet. Hierbei wird zunächst flüssige oder zähflüssige Kunststoffmasse aufgebracht, die sich anschließend verfestigt. Dies erfolgt beispielsweise von selbst durch Erstarren oder aktiv durch Zuführung von (Aktivierungs-)Energie, z.B. durch Bestrahlung etc., so dass also eine aktive Aushärtung erreicht wird. Nachfolgend wird - sofern sich nichts Anderes aus der Beschreibung ergibt - unter dem Begriff "Aushärten" sowohl das passive Erstarren als auch das aktive Aushärten subsumiert.

Häufig werden in den Außenmantel weitere zusätzliche Funktionseinheiten integriert. So werden beispielsweise am Außenmantel unmittelbar Abdichtelemente wie beispielsweise Tüllen angespritzt oder es werden auch Knickschutzelemente oder sonstige Verbreiterungen beispielsweiße im Endbereich angebracht, an denen Stecker angeordnet sind. Zur Ausbildung dieser zusätzlichen Funktionseinheiten ist dabei üblicherweise - ausgehend von einer bereits vorkonfektionierten Einheit gegebenenfalls mit bereits bestehendem Teil-Außenmantel - ein zusätzlicher Prozessschritt erforderlich, um die zusätzlichen Funktionseinheiten am Außenmantel anzubringen. Dies erfolgt üblicherweise durch ein Spritzgussverfahren, bei dem der vorkonfektionierte Leitungsstrang in eine Werkzeugform eingelegt und anschließend die aushärtbare Masse in die Werkzeugform zur Ausbildung des Funktionselements eingebracht wird.

Der gesamte Außenmantel wird daher üblicherweise in einem zweistufigen Prozess hergestellt. Hierzu wird in der ersten Stufe der Außenmantel beispielsweise durch ein kontinuierliches Extrusionsverfahren aufgebracht, um somit einen Leitungsrohling mit Leitungskern und Außenmantel quasi als Meterware bereitzustellen. Dieser Leitungsrohling wird anschließend auf die gewünschte Länge gekürzt und es werden endseitig beispielsweise Steckerelemente angeschlagen und schließlich werden die Funktionseinheiten des Außenmantels wie beispielsweise Knickschutzelemente, Steckerumhüllungen, Dichtelemente etc. angespritzt.

Insgesamt ist dieses zweistufige Verfahren vergleichsweise aufwendig. Auch führt dies bei Leitungen, welche im Gebrauchszustand sichtbar sind und beispielsweise vom Endverbraucher genutzt werden, häufig zu einer nur wenig ansprechenden Designanmutung.

Aus der DE 823 606 C ist ein Extrusionsverfahren zu entnehmen, bei dem ein rotierender Dorn mit einem kegelförmigen Nippel verwendet wird, so dass eine schraubenförmige Wendel auf einem Strang erzeugt wird.

In der DE 922 241 C ist ein Extrusionsverfahren beschreiben, bei dem nach der Extrusion des Mantels in diesen eine Struktur eingeprägt wird. Hierzu sind zwei gegenüberliegende umlaufende Bänder mit Formgebungselementen vorgesehen.

Ausgehend hiervon liegt der Erfindung die Aufgabe zugrunde, eine vereinfachte Herstellung derartiger elektrischer Leitungen zu ermöglichen,

Die Aufgabe wird erfindungsgemäß gelöst durch ein Verfahren zur Herstellung einer sich in einer Leitungslängsrichtung erstreckenden elektrischen Leitung mit den Merkmalen des Anspruchs 1. Die Leitung weist einen Leitungskern und einen diesen umgebenden Außenmantel auf. Der Außenmantel wird dabei insgesamt in einem kontinuierlichen Formgebungsverfahren mittels einer Werkzeugform ausgebildet, wobei bei diesem Formgebungsverfahren einzelne Mantelabschnitte des Außenmantels sukzessive durch ein Umgeben des Leitungskerns mit einer erstarrbaren oder aushärtbaren plastischen Masse ausgebildet werden. In zumindest einem Teilabschnitt wird dabei der Außenmantel mit einer in Leitungslängsrichtung veränderlichen Querschnittsgeometrie erzeugt.

Der Leitungskern wird bevorzugt der Werkzeugform sukzessive oder kontinuierlich zugeführt und abschnittsweise mit dem Außenmantel versehen. Mit anderen Worten: der Leitungskern wird sukzessive oder kontinuierlich durch die Werkzeugform hindurchgeführt und der Außenmantel auf den Leitungskern aufgetragen. Die Werkzeugform weist dazu zweckmäßigerweise eine Zuführungsöffnung auf, über die der Leitungskern in die Werkzeugform geführt wird. In einer Weiterbildung weist die Werkzeugform zweckmäßigerweise auch eine Austrittsöffnung auf, über die der mit dem Außenmantel versehene Leitungskern aus der Werkzeugform herausgefördert wird. Bei der Werkzeugform handelt es sich insbesondere um eine - bis auf die Zuführöffnung und ggf. die Austrittsöffnung - geschlossene Werkzeugform, die also den Leitungskern in Umfangsrichtung vollumfänglich umgibt. Alternativ handelt es sich um eine offene Werkzeugform nach Art einer Matrize, die also den Leitungskern zu einer radialen Seite hin nicht umschließt.

Mit dem Formgebungsverfahren werden daher insgesamt in einem kontinuierlichen Verfahren variierende Querschnittsgeometrien des Außenmantels erzeugt. Dadurch wird erreicht, dass trotz des kontinuierlichen Verfahrens die zuvor beschriebenen Funktionseinheiten unmittelbar am Außenmantel bei dessen Formgebung ausgebildet werden können. Es ist daher kein zusätzlicher Spritzgussschritt erforderlich, um diese Funktionseinheiten anzubringen. Im Bereich dieser Funktionseinheiten, in denen der Außenmantel eine veränderliche Querschnittsgeometrie aufweist, ist der Außenmantel daher insoweit insgesamt homogen und gleichmäßig insofern ausgebildet, als dass keine Materialtrennstellen ausgebildet sind.

Bei den elektrischen Leitungen handelt es sich dabei vorzugsweise um nichtsteife, biegeflexible Leitungen, welche also keine eigene Formstabilität aufweisen. Derartige elektrische Leitungen werden insbesondere als Anschlussleitungen für elektrische Geräte herangezogen.

Geeigneterweise wird der Leitungskern während des Verfahrens zumindest innerhalb der Werkzeugform auf Zug gehalten, wodurch insbesondere ein ungewollter Versatz des Leitungskerns relativ zum Außenmantel vermieden ist. Ein solcher Versatz ergibt sich typischerweise bei herkömmlichen Spritzgussverfahren aufgrund der seitlich wirkenden Kräfte durch das in die Werkzeugform seitlich eingespritzte plastische Material. Mittels der zusätzlichen Zugbelastung wird folglich generell einer Krafteinwirkung besonders effektiv und auf einfache Weise entgegengewirkt. Damit wird insbesondere bei rotationssymmetrischen Teilabschnitten der Leitung der Leitungskern zentral angeordnet, das heißt entlang einer Mittenachse der Leitung. Im Falle einer Leitung mit einem kreisrunden Teilabschnitt beispielsweise, verläuft der Leitungskern auf dem gesamten Teilabschnitt im Mittelpunkt der hier kreisförmigen Querschnittsgeometrie. Generell ist es möglich, den Leitungskern mittels dieses Verfahrens entlang einer vorgesehenen Längsachse anzuordnen, das heißt ein prozesstechnisch bedingtes Verrutschen des Leitungskerns bezüglich der gewünschten Position zu verhindern. Entlang eines rotationssymmetrischen Teilabschnittes entspricht die Längsachse insbesondere der oben erwähnten Mittenachse. Rotationssymmetrische Querschnittsgeometrien sind insbesondere ein Kreis, ein Quadrat oder ein anderes regelmäßiges Polygon, aber auch beispielsweise ein Rechteck, das zweizählig rotationssymmetrisch bezüglich der Mittenachse ist.

In einer bevorzugten Ausgestaltung ist der Werkzeugform zumindest ein Führungselement zugeordnet, über das der Leitungskern geführt und auf Zug gehalten wird. Unter geführt wird dabei insbesondere entweder zugeführt oder abgeführt verstanden, je nachdem, ob das Führungselement der Werkzeugform vor- oder nachgeschaltet ist. Diese Ausgestaltung ist besonders einfach und ermöglicht zugleich eine Bereitstellung einer geeigneten Zugkraft auf zumindest denjenigen Teilabschnitt des Leitungskerns, der zu einem gegebenen Zeitpunkt die Werkzeugform durchläuft. In einer zweckmäßigen Weiterbildung ist der Werkzeugform ein erstes Führungselement vorgeschaltet und ein zweites Führungselement nachgeschaltet, zum Halten des Leitungskerns auf Zug. Das Führungselement ist vorzugsweise als Förderelement und insbesondere als sogenannte Raupe ausgebildet, wobei im Falle von zumindest zwei Führungselementen das erste Führungselement als Bremsraupe wirkt und eine Zuführung des Leitungskerns in die Werkzeugform bedarfsweise hemmt und wobei das zweite Führungselement eine Schubraupe ist, die zur Erzeugung einer Zugbelastung den vom Außenmantel umgebenen Leitungskern von der Werkzeugform weg fördert. Durch geeignete Wahl der Abroll- oder Fördergeschwindigkeiten der beiden Führungselemente wird dann eine geeignete Zugkraft erzeugt, mittels der der Leitungskern gestreckt gehalten wird. Vorzugsweise wirkt die Zugbelastung auch während des Einbringens der plastischen Masse, so dass eine mögliche, temperaturbedingte Ausdehnung des Leitungskerns direkt ausgeglichen wird, das heißt der Leitungskern straff gehalten wird. Insbesondere erfolgt periodisch abwechselnd zunächst beim Einbringen der Masse eine Fixierung des Leitungskerns und anschließend eine Förderung derart, dass sich eine raupenartige Förderung des Leitungskerns ergibt, ähnlich einem Stop-and-Go-Betrieb.

In einer geeigneten Variante sind die Führungselemente als Halterungen, insbesondere als Halteklauen ausgebildet. Diese Variante eignet sich besonders bei einem quasi-kontinuierlichen Verfahren, bei dem der Leitungskern zur Ausbildung des Außenmantels auf einem jeweiligen Teilabschnitt gemeinsam mit der Werkzeugform bewegt wird, relativ zur Werkzeugform also still steht. Die Werkzeugform und der darin positionierte Leitungskern werden hierbei relativ zu einem Anspritzpunkt bewegt, über den der Werkzeugform entlang eines Angussschlitzes das plastische Material zugeführt wird. Nach Abschluss der Materialzuführung werden die Halteklauen dann gelöst und der Teilabschnitt aus der Werkzeugform herausgefördert und ein noch unverkleideter nächster Teilabschnitt des Leitungskerns zugeführt. Die Halteklauen werden dann wieder aktiviert und es erfolgt die Ausbildung des nächsten Teilabschnittes der Leitung.

Zur Ausbildung des Außenmantels wird die plastische Masse in die Werkzeugform eingebracht, wobei diese zumindest ein Formgebungsmodul aufweist, welches ein Formgebungsnest mit einer in Leitungslängsrichtung variierenden Querschnittsgeometrie aufweist, zur Ausbildung des Teilabschnitts mit entsprechend variierender Querschnittsgeometrie. Dadurch ist es insbesondere möglich, ein Leitung mit nahezu beliebiger Außenkontur zu fertigen. Insbesondere sind dabei auch Hinterschnitte möglich. Die Querschnittsgeometrie ist nicht notwendigerweise symmetrisch, sondern kann prinzipiell alle denkbaren Formen annehmen. Auf diese Weise sind ein oder mehrere Teilabschnitte entlang der Leitung mit unterschiedlichen Funktionselementen ausrüstbar. Diese oder zumindest deren Gehäuse, sofern noch zusätzliche beispielsweise elektronische Bauteile eingefügt werden müssen, sind aufgrund der gemeinsamen Ausbildung mit dem Außenmantel vorteilhaft ein Teil desselben, das heißt mit dem Außenmantel einstückig gefertigt. Hierdurch gewinnt die fertige Leitung beträchtlich an Ästhetik, aber auch an Funktionalität, besonders in Hinblick auf Dichtigkeit und Festigkeit.

Bei diesem Verfahren wird der Außenmantel mittels der Werkzeugform in einem modifizierten Extrusionsverfahren erzeugt, das auch als Spritzextrusionsverfahren bezeichnet wird. Bei diesem wird zunächst in einem Extrusionsschritt der Leitungskern kontinuierlich durch das Formgebungsmodul hindurchgeführt und ein Teilabschnitt des Außenmantels mit gleichbleibender Querschnittsgeometrie wird auf den Leitungskern aufextrudiert. In einem anschließenden Endschritt verharrt der Leitungskern innerhalb des Formgebungsmoduls und die eingebrachte plastische Masse wird in dem Formgebungsmodul ausgehärtet. Im Endschritt erfolgt damit eine Ausbildung des Teilabschnitts als ein Endabschnitt. Ein besonderer Vorteil dieser Variante ist, dass sowohl im Extrusionsschritt wie auch im Endschritt in der Werkzeugform ein gleichmäßiger, radialer und konzentrischer Druck herrscht. Dadurch unterscheidet sich insbesondere auch der Endschritt von einem herkömmlichen Spritzgussverfahren. Dieses modifizierte Extrusionsverfahren lässt sich sowohl aufbauend auf einem herkömmlichen Extruder oder auch aufbauend auf einem herkömmlichen Spritzaggregat maschinentechnisch umsetzen.

Das Formgebungsmodul erfüllt hierbei insbesondere zwei Funktionen: zum Einen dient das Formgebungsmodul im Extrusionsschritt als Extrusionsdüse oder Zuführung zu einer solchen und zum Anderen als Gussform im Endschritt. Dabei erfolgt die Zuführung des plastischen Materials in beiden Schritten auf die gleiche Weise, nämlich insbesondere im Wesentlichen in Längsrichtung und konzentrisch zu einer Mittenachse. Im Endschritt wird jedoch die Zufuhr unterbrochen und es erfolgt ein Aushärten des Materials anstelle einer Förderung.

Prinzipiell ist es in einer geeigneten Weiterbildung denkbar, die auf obige Weise gefertigte Leitung dem Prozess erneut als Teilleitung derart zuzuführen, dass an die bereits fertige Teilleitung mittels des obigen Verfahrens eine weitere Teilleitung angefügt wird. Die bereits fertige Teilleitung stellt dabei ein Halbzeug dar, dient dann als Ausgangspunkt und wird der Werkzeugform nachgeschaltet angeordnet, zur weiteren Anformung zusätzlicher Teilleitungen. Vorzugsweise wird in die Werkzeugform ein Halbzeug eingelegt und auf dieses zumindest abschnittsweise der Außenmantel aufgebracht. Das heißt: das Halbzeug umfasst einen Leitungskern, auf den mittels dem hier beschriebenen Verfahren ein Außenmantel aufgetragen wird. Anstelle lediglich eines Leitungskern wird also ein Leitungskern verwendet, an den bereits Komponenten angeformt sind. Dies ist beispielsweise bei der Herstellung von Kopfhörern sinnvoll. Das Halbzeug umfasst hierbei eine Y-förmige Gabelung, zur Aufspaltung in zwei separate Teilstränge, an deren Ende jeweils ein Kopfhörer angeordnet ist, sowie einen sich von der Gabelung erstreckenden Leitungskern einer Anschlussleitung. Das Halbzeug wird dann zu Beginn des Verfahrens in die Werkzeugform eingelegt, so dass im Folgenden der Leitungskern der Anschlussleitung mit einem Außenmantel versehen wird. Dabei ist die Anschlussleitung vorteilhaft in beliebiger Länge ausführbar.

Weiterhin ist das Formgebungsmodul teilbar und wird vorzugsweise nach dem Aushärten getrennt und der mit dem Außenmantel versehene Leitungskern wird aus dem Formgebungsmodul entnommen. Damit ist eine besonders einfache Entnahme der fertigen Leitung realisierbar. Die Entnahme ist dabei insbesondere ähnlich der Entnahme eines fertigen Spritzgussteils am Ende eines herkömmlichen Spritzgussverfahrens.

Zweckmäßigerweise wird das Formgebungsmodul temperiert und zumindest im Endschritt aktiv gekühlt, wodurch das Aushärten im Endschritt besonders schnell durchführbar ist. Die Temperierung ermöglicht auch eine Optimierung hinsichtlich des Extrusionsschritts derart, dass insbesondere die Fließeigenschaften des plastischen Materials einstellbar sind. In einer besonders geeigneten Ausgestaltung weist das Formgebungsmodul in Leitungslängsrichtung ein bestimmtes Temperaturprofil auf, wodurch dann eine besonders umfangreiche Kontrolle des Extrusionsschritts ermöglicht ist. Um ein möglichst gleichmäßiges Aushärten zu erzielen, wird auch im Endschritt ein geeignetes Temperaturprofil gewählt, welches üblicherweise unterschiedlich zu dem Temperaturprofil im Extrusionsschritt ist.

In einer vorteilhaften Ausgestaltung ist das Formgebungsmodul als Mundstück ausgebildet oder weist zumindest ein solches auf. Dem Mundstück ist ein Extrusionsdorn vorgeschaltet, durch den wiederum der Leitungskern geführt wird. Dabei ist der Extrusionsdorn in einem Materialverteiler unter Ausbildung eines ringförmigen Hohlraums aufgenommen, über den die plastische Masse zugeführt wird. Diese Ausgestaltung ist besonders geeignet für die Kombination des Extrusionsschritts mit dem spritzgussähnlichen Endschritt. Zudem erfolgt aufgrund des ringförmigen Hohlraums vorteilhaft kein direktes seitliches Anspritzen, wie bei einem herkömmlichen Spritzgussverfahren, sondern ein in Umfangsrichtung des Leitungskerns gleichmäßiges, konzentrisches und ringförmiges Einspritzen von plastischem Material. Dieses wird hierbei vorteilhaft über die Außenwand des Extrusionsdorns und im Wesentlichen in Leitungslängsrichtung in das Formgebungsmoduls eingeführt.

Insbesondere zum Aushärten der plastischen Masse beim Verlassen des Formgebungsmoduls ist diesem ein Kühlmodul nachgeschaltet, mittels dessen während des Extrusionsschritts eine Kühlung der auf den Leitungskern aufgebrachten Masse erfolgt. Damit wirkt das Kühlmodul zudem vorteilhaft als Kalibrierwerkzeug wie beispielsweise bei einer Profilextrusion. Um eine besonders effiziente Kühlung zu realisieren ist in das Kühlmodul eine Anzahl von Kühlmittelbohrungen eingebracht, durch die ein geeignetes Kühlmittel gepumpt wird. Zudem ist das Kühlmodul ähnlich dem Formgebungsmodul vorteilhafterweise teilbar, um die Entnahme der fertigen Leitung nach dem Endschritt zu vereinfachen.

In einer vorteilhaften Weiterbildung ist das Kühlmodul bezüglich des Formgebungsmoduls thermisch isoliert und die beiden Module werden zumindest während des Extrusionsschritts unterschiedlich temperiert. Auf diese Weise ist gleichzeitig zu einer optimalen Aushärtung im Kühlmodul auch eine optimale Temperierung der plastischen Masse im Formgebungsmodul ermöglicht. Im Extrusionsschritt erfolgt somit insbesondere eine Beheizung des Formgebungsmoduls sowie eine Kühlung des Kühlmoduls, im Endschritt dagegen eine Kühlung beider Module. Aufgrund der thermischen Isolierung ist eine gegenseitige Beeinflussung der zumindest im Extrusionsschritt unterschiedlich temperierten Module dann vorteilhaft verringert oder gänzlich verhindert.

Alternativ ist als Formgebungsverfahren ein Verfahren in Anlehnung an jenes Verfahren möglich, wie es beispielsweise in der WO 2006/045720 A1 oder der WO 2009/043755 beschrieben ist. Bei diesem kontinuierlichen Formgebungsverfahren handelt es sich um ein kombiniertes Extrusions- und Spritzgussverfahren, welches die Vorteile dieser beiden Verfahren miteinander verbindet, nämlich zum Einen im Rahmen eines kontinuierlichen Verfahrens den Außenmantel zu erzeugen und gleichzeitig diskontinuierlich Teilabschnitte mit veränderter Querschnittsgeometrien auszubilden.

Dieses auch als Exjection bezeichnete Verfahren zeichnet sich dadurch aus, dass eine modular aufgebaute Werkzeugform bereit gestellt ist, welche einzelne Formgebungsmodule aufweist, die aneinander gereiht sind. Die einzelnen Formgebungsmodule werden dabei entweder linear oder auch im Kreis bewegt und an einem insbesondere feststehenden Anspritzpunkt, das heißt insbesondere an einer Einspritzdüse vorbeigeführt, über den bzw. die die als Schmelze bereitgestellte aushärtbare Masse jeweils in das einzelne Formgebungsmodul eingespritzt wird, bevor dann das nächste Formgebungsmodul an die Angussstelle herangeführt wird. Dabei wird das Formgebungsmodul insbesondere kontinuierlich in einer Prozessrichtung an der Angussstelle entlanggeführt und das Befüllen erfolgt entlang eines Angussschlitzes, der in Prozessrichtung in das Formgebungsmodul eingebracht ist. Nach dem Befüllen des ersten Formgebungsmoduls wird dieses von der Angussstelle weggeführt, das heißt, der Angussschlitz steht nicht mehr in Verbindung mit dem Anspritzpunkt, sodass keine weitere Masse zugeführt wird und die eingebrachte Schmelze erstarren kann. Der erstarrte Teilabschnitt der Leitung kann dann aus dem Formgebungsmodul herausgeführt werden. Hierzu ist das Formgebungsmodul beispielsweise in zwei Teilhälften unterteilt, welche sich öffnen, um den erstarrten Teilabschnitt herauszuführen. Insgesamt wird dadurch ein Endlos-Bauteil herstellbar, welches in einem kontinuierlichen Vorgang mithilfe des modularen Aufbaus der Werkzeugform erzeugbar ist. Durch die Unterteilung der Werkzeugform in einzelne Formgebungsmodule lassen sich innerhalb dieser Formgebungsmodule variierende Querschnittsgeometrien als Formnester vorhalten. Im Unterschied und ergänzend zu den aus den beiden genannten Anmeldungen WO 2006/045720 A1 sowie WO 2009/043755 wird vorliegend der Werkzeugform sukzessive der Leiterkern zugeführt.

Vorzugsweise werden mehrere Formgebungsmodule verwendet, von denen zumindest eines zur Ausbildung eines geraden Teilabschnittes mit parallel zur Leitungslängsrichtung verlaufender Außenkontur, das heißt unveränderter Querschnittsgeometrie ausgebildet ist. Durch die Verwendung mehrerer Formgebungsmodule sind insbesondere mehrere voneinander verschiedene Teilabschnitte fertigbar.

Gemäß einer bevorzugten Ausgestaltung wird im Rahmen eines kontinuierlichen Formgebungsverfahrens in dem zumindest einen Teilabschnitt die Querschnittsgeometrie kontinuierlich erweitert. Der Außenmantel weist daher in dem einen Teilabschnitt vorzugsweise eine konische Erweiterung auf, insbesondere im Bereich eines endseitig am Kabel angeschlossenen Funktionselements wie beispielsweise ein Steckerelement. Insbesondere in dem oben beschriebenen Verfahren mit Extrusionsschritt und Endschritt ist mittels eines kontinuierlich erweiterten Teilabschnittes ein verstärkter Endabschnitt der Leitung herstellbar.

Alternativ oder ergänzend hierzu werden in dem zumindest einen Teilabschnitt eines oder eine Kombination der folgenden Elemente ausgebildet: radial nach außen abstehende Rippen, ein Knickschutz, eine Abdichttülle. Als Rippen ausgebildete Elemente verlaufen dabei entweder als Kreisringe jeweils voneinander beabstandet um den restlichen Außenmantel oder sind wendelförmig verlaufend angeordnet oder in einer sonstigen Geometrie. Mittels der Rippen ist auf einfache Weise ein besonders griffige Oberfläche geschaffen, durch die insbesondere die Handhabung für einen Benutzer der Leitung besonders komfortabel gestaltet ist. Über diese abstehenden Rippen wird dabei insbesondere ein Knickschutz ausgebildet. Dies erfolgt wiederum vorzugsweise in einem Endbereich der Leitung. Als Knickschutz eignet sich zudem auch eine geeignet variierende Querschnittsgeometrie. Bei Ausbildung einer Abdichttülle wird im eingebauten Zustand später insbesondere eine Durchgangsöffnung abgedichtet, durch welche die Leitung geführt ist. Anstelle von oder zusätzlich zu den oben genannten Ausführungen sind noch eine Vielzahl weiterer Ausführungen des Teilabschnitts als Gehäuse oder Grundstruktur für ein Funktionselement denkbar, beispielsweise für einen Stecker, einen Kopfhörer, einen Sensor oder ein Ventil.

Vorzugsweise wird in dem zumindest einen Teilabschnitt die Querschnittsgeometrie insgesamt verändert. Durch die Variation der Querschnittsgeometrie wird daher nicht nur die Querschnittsfläche sondern eben auch die umlaufende Kontur verändert. Hierdurch ist beispielsweise dadurch ermöglicht, dass in dem zumindest einen Teilabschnitt die Querschnittsgeometrie von rund auf oval, eckig etc. oder umgekehrt variiert wird. Mittels einer Änderung der Querschnittsgeometrie ist es vorteilhafterweise möglich, eine Translation der Leitung, eine Torsion oder sogar beides im Betrieb zu vermeiden. So ermöglicht beispielsweise eine dreieckige Querschnittsgeometrie eine Translation, jedoch keine Torsion der Leitung.

Zweckmäßigerweise wird eine Länge vorgegeben und vor dem zumindest einen Teilabschnitt der Außenmantel auf der vorgegebenen Länge mit einer gleichen Querschnittsgeometrie erzeugt.. Durch diese Variante ist es insbesondere möglich, eine Leitung auszubilden, die zunächst ein Kabel mit einer bestimmten Länge, nämlich im Wesentlichen der vorgegebenen Länge ist, mit einem an dessen Ende angeordneten Funktionselement. Dabei ist das Funktionselement oder zumindest dessen Gehäuse vorteilhaft ein Teil des Außenmantels des Kabels, das heißt einstückig mit diesem gefertigt und weist die damit verbundenen bereits genannten Vorteile auf.

In bevorzugter Weiterbildung wird, wie bereits oben angedeutet zumindest ein Teilabschnitt in Leitungslängsrichtung endseitig ausgebildet und als ein Endabschnitt ausgebildet. Der Endabschnitt weist dabei beispielsweise ein elektrisches Funktionselement auf, beispielsweise ein Steckerelement, ein Schalter oder eine Sensors, das dann in den Außenmantel integriert ist. Dadurch ergibt sich eine ansatzfreie, optisch ansprechende Integration des (Stecker-) Endbereichs des Funktionselements in den Außenmantel. Durch eine solche Integration ist zudem ein besonders hohes Maß an Dichtigkeit gewährleistet.

In bevorzugter Ausgestaltung wird ein Mehrkomponenten-Formgebungsverfahren, insbesondere ein sogenanntes 2K-Verfahren eingesetzt, bei dem also mehrere, insbesondere zwei verschiedene Kunststoffe zur Ausbildung des Außenmantels verwendet werden. Hierzu werden mehrere, insbesondere zwei (Spritz-) Gussaggregate eingesetzt, über die die verschiedenen plastischen Kunststoffmassen zugeführt werden. Der Außenmantel weist daher in unterschiedlichen Bereichen unterschiedliche Kunststoffe auf, die sich im Hinblick auf Ihre Eigenschaften beispielsweise physikalischen Eigenschaften, unterschieden. Insbesondere werden hierbei Bereiche mit unterschiedlicher Härte ausgebildet. Speziell werden in den Bereichen mit von der Grundform abweichender, variierender Querschnittsgeometrie beispielsweise spezielle Funktionselemente oder Funktionszonen aus einem zur Grundform verschiedenen, insbesondere härterem Material ausgebildet.

Vorzugsweise werden mehrere Formgebungsmodule in einem Modulkorb angeordnet, wodurch sich das Verfahren besonders einfach modular gestalten lässt. Dabei werden die mehreren Formgebungsmodule insbesondere entlang der Längsachse hintereinander in den Modulkorb eingesetzt. Zweckmäßigerweise sind zusätzlich Ausrichtungselemente angeordnet, zur Ausrichtung und insbesondere Arretierung der Formgebungsmodule. Dazu ist geeigneterweise eine Anzahl von Führungsschienen oder-seilen parallel zur Längsachse und durch die Formgebungsmodule, insbesondere durch jedes der Formgebungsmodule hindurch geführt. Um während der Durchführung des Verfahrens einen optimalen Halt zu gewährleisten werden in bevorzugter Ausgestaltung die Formgebungsmodule im Modulkorb in Längsrichtung gegeneinander verpresst. Dazu weist der Modulkorb endseitig eine Abschlusswand oder ein sonstiges Gegenlager auf, gegen das der Stapel von Formgebungsmodulen gedrückt wird. Am anderen Ende ist der Modulkorb dann insbesondere offen. Um eine besonders gleichmäßige Anpresskraft zu erzeugen in an diesem anderen Ende eine zweites insbesondere nach Art einer Abschlussplatte ausgebildetes Gegenlager an den Stapel angefügt, wobei die Abschlussplatte insbesondere ebenfalls geeignete Durchführungen für die Ausrichtungselemente aufweist.

Durch diesen modularen Aufbau lassen sich unterschiedlichste Leitungstypen kostengünstig mit einem Satz an Formgebungsmodulen herstellen. Hierzu werden lediglich unterschiedliche Formgebungsmodule kombiniert oder ihre Reihenfolge variiert. Hierdurch ist ein kostengünstiges, flexibles Verfahren ermöglicht.

Generell weist die hergestellte Leitung insbesondere einen in Leitungslängsrichtung und entlang der Längsachse verlaufenden Leitungskern auf. In ausgestrecktem Zustand verläuft der Leitungskern auf der gesamten Leitung somit gerade. Insbesondere auf denjenigen Teilabschnitten, deren Querschnittsgeometrie rotationssymmetrisch ist, verläuft der Leitungskern somit zentral auf einer Mittenachse. Durch diese besonders genaue Ausrichtung oder Zentrierung des Leitungskerns weist der Außenmantel auf jedem Abschnitt der Leitung eine geeignete und insbesondere gleichmäßige radiale Stärke auf.

Bei der Leitung handelt es sich zweckdienlicherweise um ein sichtbares Anschlusskabel für elektrische Geräte. Bei diesem Anschlusskabel handelt es sich dabei insbesondere um ein Medienkabel für die Übertragung von Audio-, Video- oder auch Datendateien. Daneben kann es sich aber auch um ein Anschlusskabel für Haushaltsgeräte handeln, insbesondere solche, bei denen das Anschlusskabel dauernd sichtbar ist. Durch das hier beschriebene elektrische Kabel ist eine besondere Designanmutung der elektrischen Leitung erreicht.

Die Aufgabe wird weiterhin gelöst durch eine Werkzeugform mit den Merkmalen des Anspruchs 6. Dabei gelten die im Zusammenhang mit dem Verfahren und genannten Vorteile und Weiterbildungen sinngemäß auch für die Werkzeugform.

Die Werkzeugform umfasst ein Formgebungsmodul, das ein Formnest mit veränderlicher Querschnittsgeometrie aufweist sowie eine Zuführungsöffnung zur Zuführung eines Leitungskerns. Mittels einer solchen Werkzeugform ist eine Leitung mit besonders vorteilhaft ausgerichtetem Leitungskern herstellbar. Das Formgebungsmodul ist als teilbare Extrusionsdüse ausgebildet und zur Durchführung des oben beschriebenen Spritzextrusionsverfahrens mit einem Extrusionsschritt und einem Endschritt geeignet.

Ausführungsbeispiele für unterschiedliche Verfahren zur Herstellung einer elektrischen Leitung werden nachfolgend anhand der Figuren näher erläutert. Diese zeigen jeweils in vereinfachten Darstellungen:
- Fig. 1: Eine Ansicht einer elektrischen Leitung gemäß einer ersten Ausführungsvariante,
- Fig.. 2: eine Ansicht einer elektrischen Leitung gemäß einer zweiten Ausführungsvariante,
- Fig. 3A: eine stark vereinfachte, schematisierte Darstellung eines ersten kontinuierlichen Formgebungsverfahrens in einer ersten Ansicht,
- Fig. 3B: das erste Formgebungsverfahren gemäß Fig. 3A in einer zweiten Ansicht,
- Fig. 3C: eine Variante des Formgebungsverfahrens gemäß Fig. 3A,
- Fig. 3D: die Anordnung der Fig. 3C in einer Explosionsdarstellung,
- Fig. 4: eine erste Ausgestaltung des ersten Formgebungsverfahrens,
- Fig. 5: eine zweite Ausgestaltung des ersten Formgebungsverfahrens,
- Fig. 6: ein alternatives zweites, erfindungsgemäßes Formgebungsverfahren,
- Fig. 7: eine Werkzeugform für das zweite, erfindungsgemäße Formgebungsverfahren gemäß Fig. 6, und
- Fig. 8: eine Ansicht einer elektrischen Leitung gemäß einer dritten Ausführungsvariante.

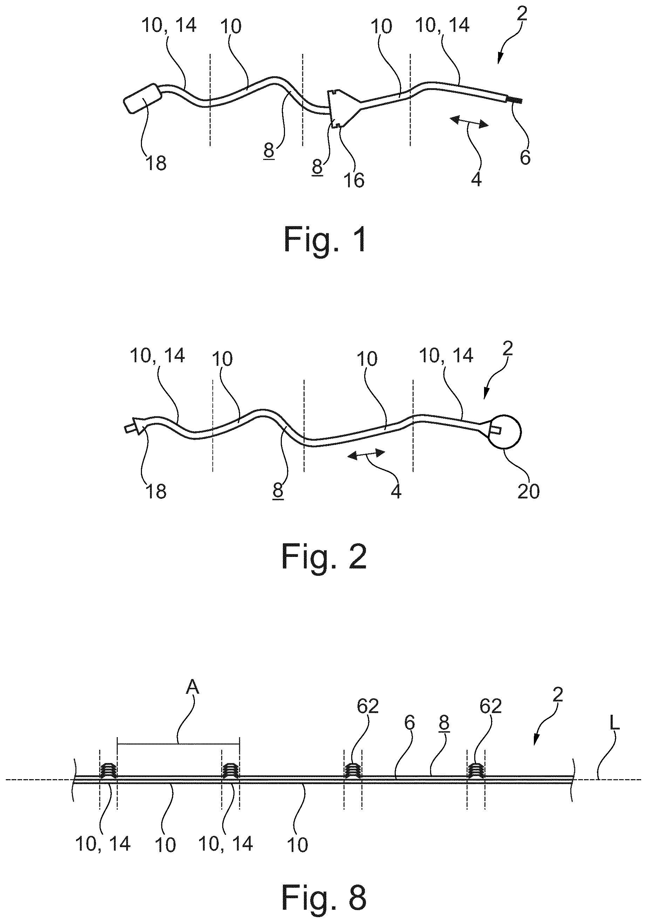

Die in den Fig. 1 und 2 dargestellten elektrischen Leitungen 2 erstrecken sich jeweils in einer Leitungslängsrichtung 4 und umfassen einen Leitungskern 6, welcher von einem Außenmantel 8 umgeben ist. Der Außenmantel 8 ist dabei ausgebildet aus einzelnen, unmittelbar aneinander angrenzenden Mantelabschnitten 10. Im endgefertigten Zustand sind die Mantelabschnitte 10 aufgrund des nachfolgend noch zu beschreibenden speziellen Formgebungsverfahrens nicht einzelweise erkennbar, dass heißt die Stellen, an denen die einzelnen Mantelabschnitte 10 aneinander angrenzen sind nicht unterscheidbar.

Bei dem Außenmantel 8 handelt es sich um einen Schutz- oder Isolationsmantel, welcher allgemein aus einer aushärtbaren plastischen Polymermasse ausgebildet ist. Bei dem Leitungskern 6 handelt es sich um ein oder mehrere elektrische Leiteradern 12, die beispielsweise als gebündelte Einzeladern oder auch als Koaxialleitungen etc. vorliegen. Der Leitungskern 6 kann auch einen komplexen Aufbau aus unterschiedlichen Leitungskomponenten aufweisen. Dabei können auch optische Übertragungsfasern und /oder sonstige Komponenten in den Leitungskern 6 integriert sein. Vorzugsweise handelt es sich bei dem Leitungskern 6 jedoch ausschließlich um elektrische Leiteradern 12, die jeweils einen von einer Isolierung umgebenden elektrischen Leiter aufweisen.

Bei den elektrischen Leitungen 2 handelt es sich vorzugweise um flexible, also nicht formstabile Leitungen, wie sie beispielsweise als Anschlusskabel für unterschiedlichste technische Geräte insbesondere der Unterhaltungselektronik eingesetzt werden.

Die in Fig. 1 dargestellte elektrische Leitung 2 weist zwei spezielle Teilabschnitte 14 auf, in denen der Außenmantel 8 eine im Vergleich zu den übrigen Mantelabschnitten 10 veränderte Querschnittsgeometrie aufweist. In einer mittleren Position ist dabei eine Abdichttülle 16 ausgebildet, welche also unmittelbarer Teil des Außenmantels 8 ist. In einem Endbereich auf der linken Seite ist schließlich ein Steckergehäuse 18 unmittelbar als Teilstück des Außenmantels 8 ausgeformt. Die Abdichttülle 16 erstreckt sich dabei in radialer Richtung ausgehend von einer Grundform des Außenmantels 8. Üblicherweise erweitert sich hierbei der Außenmantel 8 bis auf einen radialen Enddurchmesser, welcher ein Vielfaches des normalen Durchmessers beträgt. Im Ausführungsbeispiel umfasst die Abdichthülle 16 eine umlaufende Ringnut. Weiterhin ist im Ausführungsbeispiel vorgesehen, dass die Abdichttülle 16 an ihrer einen Endseite nach Art einer Abschlussplatte sich etwa senkrecht zur Leitungslängsrichtung 4 erstreckt. Die Abdichttülle 16 weist beispielsweise eine kreisförmige Querschnittskontur oder alternativ auch eine rechteckige Querschnittskontur auf.

In gleicher Weise ist auch bei dem Steckergehäuse 18 vorgesehen, dass dieser wahlweise eine kreisrunde oder auch eine rechteckige Querschnittskontur aufweist, welche in radialer Richtung über den Grund-Querschnitt des Außenmantels 8 übersteht. Prinzipiell ist jedoch eine im Wesentlichen beliebige Querschnittskontur realisierbar. Desweiteren sind auch Hinterschneidungen möglich. Im Ausführungsbeispiel der Fig. 1 ist hierbei ein abrupter Wechsel und damit Querschnittssprung beim Beginn des Steckergehäuses 18 vorgesehen.

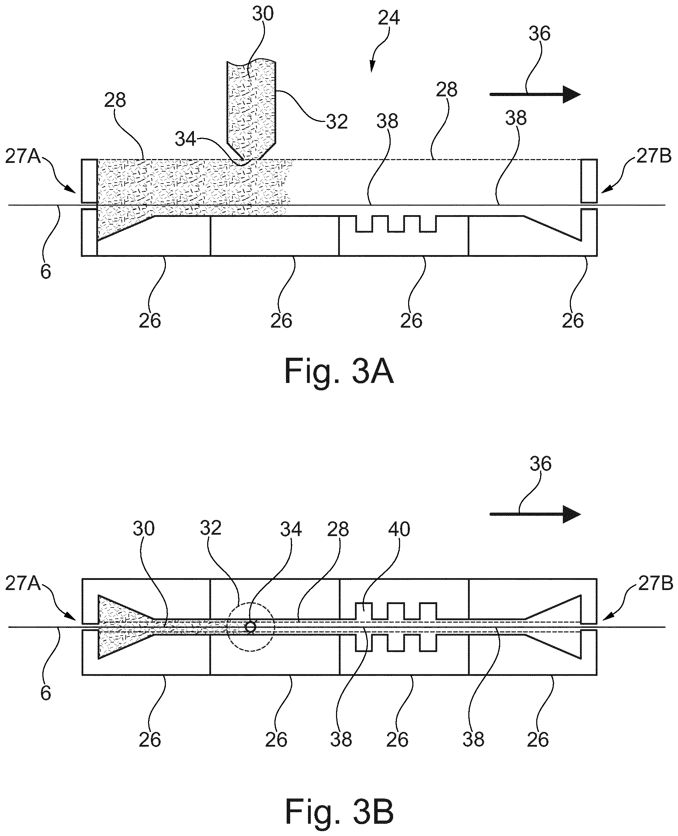

Fig. 2 zeigt als Ausführungsbeispiel für die elektrische Leitung 2 ein Kopfhörerkabel mit integriertem In-Ear-Kopfhörer 20. Der In-Ear-Kopfhörer 20 ist dabei unmittelbar auch in den Außenmantel 8 mit integriert, wobei dieser sich hierzu im Endbereich zum In-Ear-Kopfhörer 20 konisch erweitert. An dem gegenüberliegenden Ende ist ebenfalls ein sich konisch erweiterndes Endstück des Außenmantels 8 ausgebildet, aus dem ein Steckerelement 22 heraustritt. Das kontinuierliche Formgebungsverfahren wird nachfolgend anhand der Fig. 3A und 3B näher erläutert:
Zur Herstellung der elektrischen Leitung 2 wird eine modulare Werkzeugform 24 herangezogen, welche mehrere Formgebungsmodule 26 aufweist, die sich unmittelbar aneinander anreihen. Zur Zuführung des Leitungskerns umfasst die hier dargestellte Werkzeugform 24 eine Zuführungsöffnung 27A, über die während des Verfahrens der Leitungskern 6 sukzessive oder kontinuierlich in die Werkzeugform 24 hineingeführt wird. Desweiteren umfasst die in den Fig. 3A und 3B gezeigte Werkzeugform auch eine Austrittsöffnung 27B, über die der Leitungskern 6 aus der Werkzeugform 24 herausführbar ist.

Die einzelnen Formgebungsmodule 26 sind nach Art von üblichen Werkzeugformen ausgebildet und beispielsweise in der Mitte entlang einer Teilungsebene geteilt. Jedes Formgebungsmodul 26 weist zumindest einen sich in einer Förderrichtung 36 erstreckenden Angussschlitz 28 auf, der besonders deutlich in der in Fig. 3B gezeigten Aufsicht erkennbar ist. Über den jeweiligen Angussschlitz 28 wird eine als Schmelze vorliegende plastische Masse 30 eingebracht. Dies erfolgt mithilfe einer Einspritzeinheit 32, welche die Masse 30 an einem jeweiligen Anspritzpunkt 34 in das jeweilige Formgebungsmodul 26 einspritzt. Dabei wird der Anspritzpunkt 34 kontinuierlich entlang des Angussschlitzes 28 geführt.

Die einzelnen Formgebungsmodule 26 werden während des Formgebungsverfahrens in einer Förderrichtung 36 an dem insbesondere feststehenden Anspritzpunkt 34 vorbeigeführt. Im Ausführungsbeispiel sind die einzelnen Formgebungsmodule 26 linear aneinander angereiht. In einer alternativen, bevorzugter Ausgestaltung sind die einzelnen Formgebungsmodule 26 kreisförmig aneinander angrenzend angeordnet, sodass sie also entlang einer Kreisbahn immer wieder an dem Anspritzpunkt 34 vorbeigeführt werden. In einer Kombination ist es auch möglich, eine lineare Endlosfertigung derart zu realisieren, dass mehrere Formgebungsmodul 26 linear angeordnet sind und wiederkehrend das jeweils letzte Formgebungsmodul 26 in der Reihe mittels eines geeigneten Mechanismus vor das erste Formgebungsmodul 26 der Reihe gesetzt wird. Dieses Verfahren ist besonders geeignet zur Endlosfertigung von zunächst geraden Leitungen 2.

Innerhalb der einzelnen Formgebungsmodule 26 sind Formnester 38 durch den freien Innenhohlraum definiert, welche also die Form des auszubildenden Außenmantels 8 festlegen und definieren. Durch den modularen Aufbau ist es dabei ermöglicht, unterschiedliche Formnester 38 bereitzustellen, um unterschiedliche Querschnittsgeometrien für die einzelnen Mantelabschnitte 10 auszubilden.

Im stark vereinfachten Beispiel der Fig. 3A und 3B weisen die beiden außenliegenden Formgebungsmodule 26 jeweils Formgebungsnester 38 mit einer sich konisch erweiternden Form auf. Das linke der beiden mittleren Formgebungsmodule 26 zeigt ein Formgebungsnest 38 mit einer normalen, kreisrunden Querschnittsgeometrie ohne radiale Erweiterung. Schließlich zeigt das sich daran rechts anschließende Formgebungsmodul 26 eine Rippenstruktur zur Ausbildung von radial nach außen abstehenden Rippen 40.

Bei der vereinfachten Darstellung gemäß der Fig. 3A und 3B ist der Leitungskern 6 nicht dargestellt, welcher vor dem Zuführen der Masse 30 in die modulare Werkzeugform 24 eingebracht wird. Im Ausführungsbeispiel handelt es sich um eine beidseitig abgeschlossene Werkzeugform, sodass also das hergestellte Endkabel bereits mit definierter Länge erzeugt wird. Alternativ hierzu ist - insbesondere bei einer kreisförmigen Anordnung der einzelnen Formgebungsmodule 26 - auch ein kontinuierliches Herstellen einer Endlos-Leitung ermöglicht, bei dem in periodisch wiederkehrenden Längenabschnitten die speziellen Mantelabschnitte 10 wiederkehrend ausgebildet werden. Dies ist insbesondere für die Herstellung von Standard-Kabeln von Vorteil, die beispielsweise nachher noch durch Ablängen in eine gewünschte Konfektionslänge gebracht werden.

Beim Herstellen werden die Angussschlitze 28 der einzelnen Formgebungsmodule 26 nacheinander an dem Anspritzpunkt 34 vorbeigeführt und es wird über den jeweiligen Angussschlitz 28 die Masse 30 eingebracht, bis das jeweilige Formgebungsmodul 26 gefüllt ist. Anschließend wird das nächste Formgebungsmodul 26 gefüllt, sodass also ein kontinuierliches Füllen des durch die einzelnen Formgebungsmodule 26 gebildeten Innenhohlraums der modularen Werkzeugform 24 erfolgt. In den zuerst befüllten Formgebungsmodulen 26 härtet dabei die Masse 30 bereits aus, sodass die einzelnen Abschnitte der Leitung 2 nach Öffnen der jeweiligen Formgebungsmodule 26 aus sukzessive entnommen werden können. Es wird also ein strangförmiges Gebilde kontinuierlich aus der modularen Werkzeugform 24 entnommen.

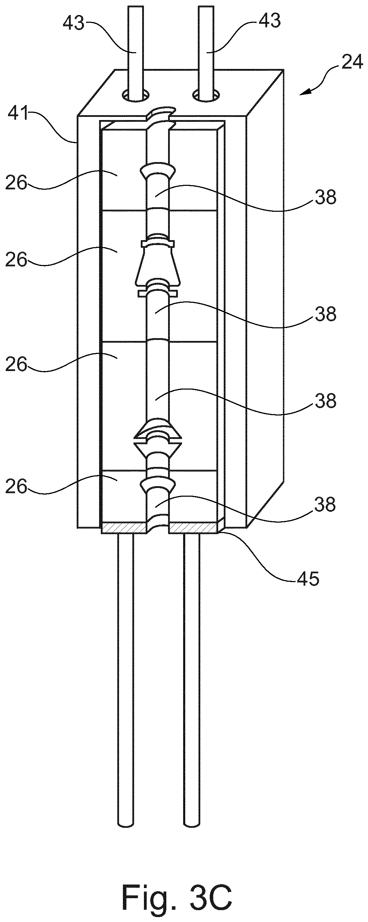

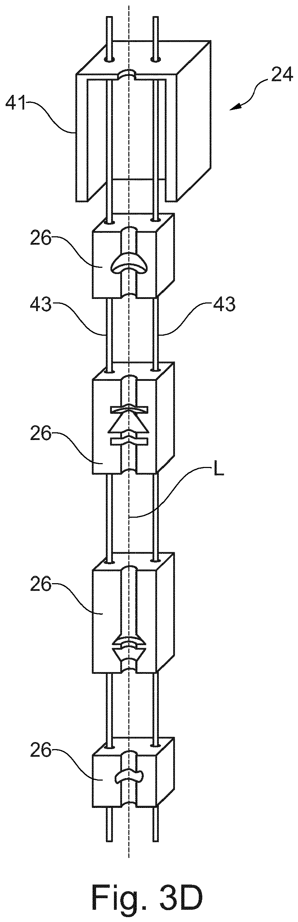

Zur weiteren Verdeutlichung einer geeigneten Ausgestaltung des Verfahrens zeigen die Fig. 3C und 3D eine Variante der Anordnung der Fig. 3A und 3B in einer perspektivischen Darstellung. Dabei zeigt die Fig. 3D die Anordnung aus Fig. 3A in einer Explosionsdarstellung. Deutlich erkennbar sind die mehreren Formgebungsmodule 26, die hier in einem Modulkorb 41 und hintereinander bezüglich der Längsachse L angeordnet sind. Zur Ausrichtung der Formgebungsmodule 26 ist zudem eine Anzahl von Ausrichtungselementen 43 in Längsrichtung L durch den Modulkorb 41 geführt. Die Formgebungsmodule 26 weisen dann jeweils entsprechende Durchführungen auf, durch welche die Ausrichtungselemente 43 hindurchgeführt sind. Am unteren Ende des Stapels von Formgebungsmodulen 26 ist eine Abschlussplatte 45 angeordnet, auf welche ein geeigneter Anpressdruck ausgeübt wird, um die Formgebungselemente 26 gegeneinander fest zu positionieren und Spalten zwischen den Formgebungselementen 26 zu vermeiden oder zu reduzieren.

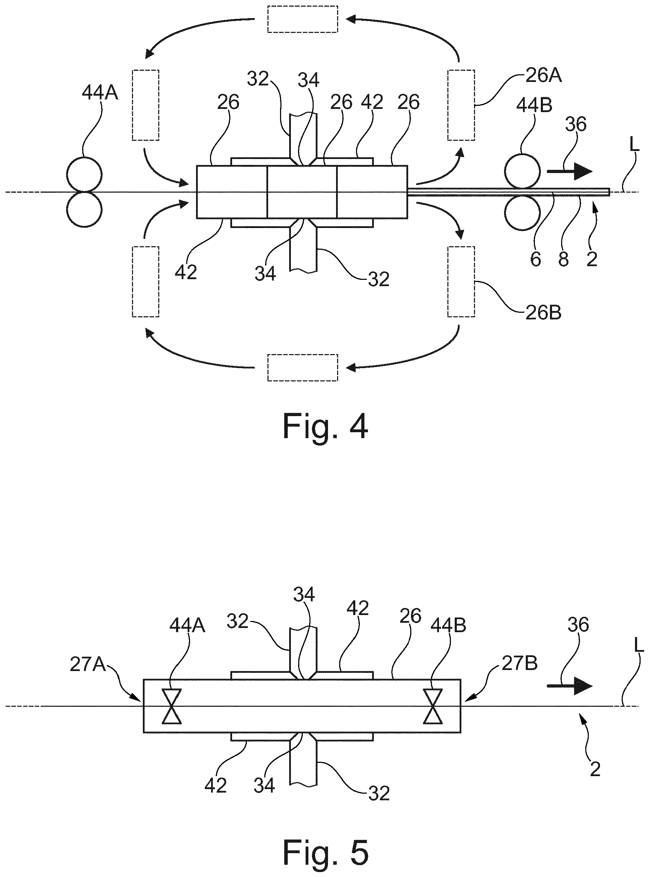

Zur weiteren Veranschaulichung ist in Fig. 4 schematisch ein erstes Ausführungsbeispiel des oben beschriebenen Verfahrens dargestellt. Die Werkzeugform 24 umfasst hier mehrere Formgebungsmodule 26, die jeweils in zwei Hälften 26A, 26B teilbar sind. In dem hier gezeigten Ausführungsbeispiel sind drei Formgebungsmodule 26 in einer Reihe, das heißt linear angeordnet wobei an das mittlere Formgebungsmodul 26 zwei Anspritzpunkte 34 angesetzt sind. Um ein Herausquellen der Masse 30 aus dem nicht von den Anspritzpunkten 34 abgedeckten Bereich der Angussschlitze 28 zu verhindern, ist das Formgebungsmodul zusätzlich von hier zwei Dichtungsplatten 42 eingefasst.

Der Werkzeugform 24 wird kontinuierlich ein Leitungskern 6 zugeführt, auf den die plastische Masse 30 aufgetragen wird. Sowohl der Leitungskern 6 als auch die Formgebungselemente werden dabei in Förderrichtung 36 und relativ zu den Anspritzpunkten 34 bewegt. Die Formgebungselemente 26 werden dabei wiederkehrend in die jeweiligen Hälften 26A, 26B geteilt und über einen hier nicht näher dargestellten Mechanismus zurückgefördert, um wieder zusammengesetzt und erneut an den Anspritzpunkten 34 vorbeigeführt zu werden.

Der Leitungskern 6 wird während des Produktionsvorganges durch zwei hier als Förderelemente ausgebildete Führungselemente 44A, 44B der Werkzeugform 24 zugeführt und mit aufgebrachtem Außenmantel 8 aus der Werkzeugform 24 abgeführt, das heißt herausgefördert. Dabei wird der Leitungskern 6 mittels der Führungselemente 44A, 44B auch auf Zug gehalten, um ein Verrutschen des Leitungskern 6 relativ zu einer vorgegebenen Längsachse L beim Einspritzen der Masse 30 zu verhindern und eine mögliche Ausdehnung des Leitungskerns 6 zu kompensieren, wiederum um ein Verrutschen zu vermeiden. Um eine Zugbelastung zu realisieren ist in der hier gezeigten Ausführungsform das eine Führungselement 44A als Bremsraupe ausgebildet und das andere Führungselement 44B als Schubraupe.

In Fig. 5 ist ein zweites Ausführungsbeispiel zur Herstellung einer Leitung 2 schematisch dargestellt. Im Unterschied zu dem oben beschriebenen Verfahren wird die Leitung 6 mittels zweier als Halteklauen ausgebildeten Führungselemente 44A, 44B an der Werkzeugform 24 gehaltert und die Leitung 6 wird gemeinsam mit der Werkzeugform 24 an den Anspritzpunkten 34 vorbeigeführt. Insbesondere wird hierbei die Leitung 2 komplett gefertigt. Nach dem Einspritzen der Masse 30 und dem Aushärten derselben wird die Leitung 2 aus der Werkzeugform 24 entnommen, diese zurückgeführt und ein neuer Abschnitt des Leitungskerns 6 zugeführt. Das Verfahren ist damit quasi-kontinuierlich, im Unterschied zu dem in der Fig. 4 beschriebenen rein kontinuierlichen Verfahren.

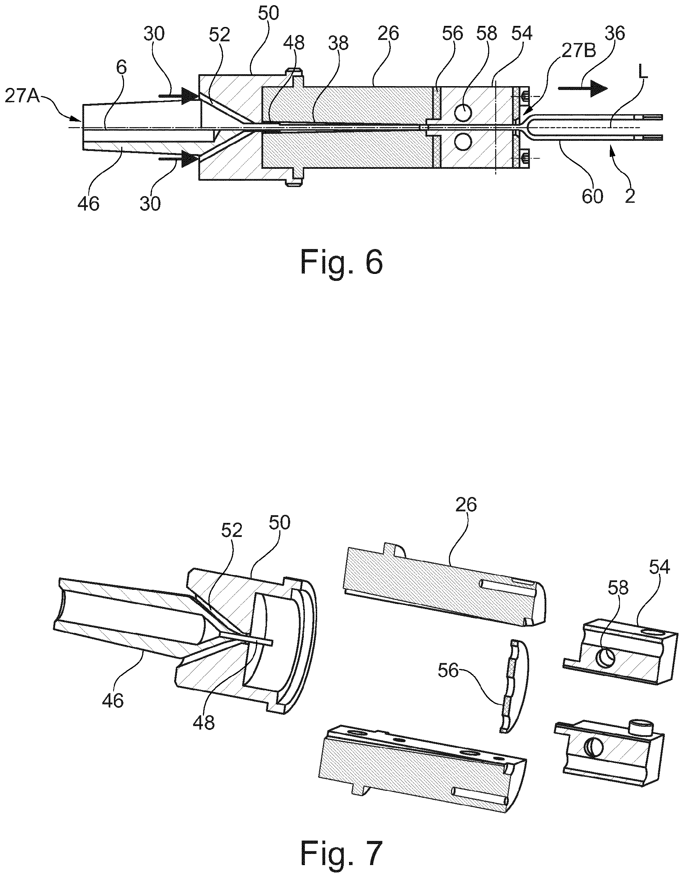

In Fig. 6 ist eine alternative Ausgestaltung des Formgebungsverfahrens dargestellt, das einen kontinuierlichen Verfahrensteil und einen Spritzguss-ähnlichen Verfahrensteil aufweist, nämlich einen Extrusionsschritt und einen Endschritt. Die in Fig. 6 gezeigte Anordnung umfasst dazu zunächst eine Werkzeugform 24, die ein Formgebungsmodul 26 aufweist, das im Extrusionsschritt als Mundstück dient und im Endschritt als Form für einen insbesondere endseitigen Teilabschnitt 14 der Leitung 2.

Zur Herstellung der Leitung 2 wird dem Formgebungsmodul 26 über einen Extrusionsdorn 46 ein Leitungskern 6 und eine plastische Masse 30 zugeführt. Dabei wird der Leitungskern 6 über einen Fortsatz 48 des Extrusionsdorn 46 dem Formgebungselement 26 zentriert zugeführt, das heißt auf einer Längsachse L, die in dem hier gezeigten Ausführungsbeispiel zugleich eine Mittenachse der fertigen Leitung 2 ist.

Die plastische Masse 30 wird dem Formgebungsmodul 26 über die Außenwand des Extrusionsdorns 46 zugeführt, der in der hier gezeigten Ausführungsform in einen Materialverteiler 50 eingesetzt ist und mit diesem einen kegelmantelförmigen, allgemein einen ringförmigen Hohlraum 52 ausbildet. Über diesen Hohlraum 52 wird die mittels einer hier nicht dargestellten Einspritzeinheit 32 in den Materialverteiler 50 eingebrachte Masse 30 besonders gleichmäßig in radialer Richtung bezüglich der Längsachse L auf den Leitungskern 6 aufgetragen. Dabei wird das Formgebungsmodul 26 insbesondere geeignet temperiert, um die plastische Masse 30 fließfähig zu halten.

Der Leitungskern 6 und die Masse 30 werden dann durch das Formgebungsmodul 26 hindurch in Förderrichtung 36 in ein Kühlmodul 54 gefördert. Dieses ist gegenüber dem Formgebungsmodul 26 mittels eines Isolators 56 thermisch isoliert und weist zudem eine Anzahl von Kühlmittelbohrungen 58 auf, durch die eine Kühlflüssigkeit gepumpt wird. Im Kühlmodul 54 wird die Masse 30 abgekühlt und ausgehärtet, so dass der Leitungskern 6 am Ende des Kühlmoduls mit einem fertigen Außenmantel 8 versehen ist, zur Ausbildung eines Mantelabschnitts 10.

In Fig. 6 ist zudem gezeigt, dass die Leitung 2 auch an ein bereits gefertigtes Halbzeug 60 anformbar ist. Das hier dargestellte Halbzeug 60 umfasst eine Gabelung, zur Aufspaltung in zwei separate Teilstränge, wie dies beispielsweise bei Kopfhörern üblich ist. Das Halbzeug 60 wird dann zu Beginn des Verfahrens geeignet in die Werkzeugform 24 eingelegt, so dass im Folgenden die Leitung 2 direkt und in beliebiger Länge anformbar ist.

Zum Abschluss der Leitung 2 wird im Endschritt des in Fig. 6 gezeigten Verfahrens die Förderung des Leitungskerns 6 gestoppt und die in dem Formgebungsmodul 26 verbliebene Masse 30 ausgehärtet. Hierzu wird das Formgebungsmodul 26 insbesondere gekühlt. Durch entsprechende Ausgestaltung des Formgebungsnestes 38 des Formgebungsmoduls 26 ist dann der nun endseitig an der Leitung 2 angeordnete Teilabschnitt 14 nahezu beliebig gestaltbar. In dem hier gezeigten Ausführungsbeispiel ist der Außenmantel 8 auf dem Teilabschnitt 14 entgegen der Förderrichtung 36 aufgeweitet ausgebildet.

In Fig. 7 ist die Werkzeugform 24 aus Fig. 6 in einer Explosionsdarstellung einer Schnittansicht gezeigt. Deutlich erkennbar sind der Extrusionsdorn 46, der Materialverteiler 50, das Formgebungsmodul 26, der Isolator 56 und das Kühlmodul 54. Das Formgebungsmodul 26 und das Kühlmodul 54 sind hier insbesondere teilbar, um eine Entnahme der Leitung 2 nach dem Endschritt zu erleichtern.

Fig. 8 zeigt schematisch ein drittes Ausführungsbeispiel einer Leitung 2, die sich insbesondere mit einem der im Zusammenhang mit den Fig. 4 und 5 beschriebenen Formgebungsverfahren auf einfache Weise fertigen lässt. Die Leitung 2 ist als Endlosleitung konzipiert, das heißt mit einer vorgegebenen Länge fertigbar, die je nach Anwendungsanforderungen während des Herstellungsverfahrens einstellbar ist. Die Leitung 2 umfasst einen hier als Band ausgeführten Leitungskern 6, auf den ein Flachband-ähnlicher Außenmantel 8 aufgetragen wurde. Entlang der Leitung 2 ist in vorgegebenem Abstand A wiederkehrend eine Anzahl von als Befestigungspunkte 62 ausgeformte Teilabschnitte 14 angeordnet, die hier als Tannenbaum-Knöpfe ausgebildet sind. Die Befestigungspunkte 62 sind dabei während des Ausbildens des Außenmantels 8 gefertigt worden, das heißt einstückig mit diesem. Zwischen zwei Befestigungspunkten 62 erstreckt sich dann jeweils ein Mantelabschnitt 10, der entlang der Längsachse L eine unveränderliche Querschnittsgeometrie aufweist.

Die in Fig. 8 dargestellte Leitung 2 ist allerdings auch mittels des in der Fig. 6 beschriebenen Verfahrens herstellbar. Dazu weist das Formgebungsmodul 26 ein zur Ausbildung eines Befestigungspunktes 62 geeignetes Formnest 36 auf. Im Extrusionsschritt wird dann zunächst ein Mantelabschnitt 10 gefertigt, an den dann in einem anschließenden Endschritt ein Befestigungspunkt 62 als Teilabschnitt 14 angefügt wird. Nach dem Aushärten wird das Formgebungsmodul 26 geöffnet, die Leitung 2 entnommen und als Halbzeug 60 zur Anformung eines weiteren Mantelabschnitts 10 mit abschließendem Befestigungspunkt 62 verwendet. Dabei braucht der Leitungskern 6 vorteilhaft nicht durchtrennt zu werden. Dadurch ist eine beliebig lange Leitung 2 mit mehreren Befestigungspunkten 62 in vorgegebenem Abstand A herstellbar, wobei zwischen den Befestigungspunkten 62 jeweils ein Mantelabschnitt 10 angeordnet ist.

### Bezugszeichenliste

- 2: elektrische Leitung
- 4: Leitungslängsrichtung
- 6: Leitungskern
- 8: Außenmantel
- 10: Mantelabschnitt
- 12: Leiterader
- 14: Teilabschnitt
- 16: Abdichttülle
- 18: Steckergehäuse
- 20: In-Ear-Kopfhörer
- 22: Steckerelement
- 24: modulare Werkzeugform
- 26: Formgebungsmodul
- 26A, 26B: Hälfte
- 27A: Zuführungsöffnung
- 27B: Austrittsöffnung
- 28: Angussschlitz
- 30: plastische Masse
- 32: Einspritzeinheit
- 34: Anspritzpunkt
- 36: Förderrichtung
- 38: Formgebungsnest
- 40: Rippen
- 41: Modulkorb
- 42: Dichtungsplatte
- 43: Ausrichtungselement
- 44A, 44B: Führungselement
- 45: Abschlussplatte
- 46: Extrusionsdorn
- 48: Fortsatz (des Extrusionsdorns)
- 50: Materialverteiler
- 52: Hohlraum
- 54: Kühlmodul
- 56: Isolator
- 58: Kühlmittelbohrungen
- 60: Halbzeug
- 62: Befestigungspunkten

- L: Längsachse
- A: Abstand

## Patentansprüche

1. Verfahren zur Herstellung einer sich in einer Leitungslängsrichtung (4) erstreckenden Leitung (2) mit einem Leitungskern (6) und mit einem diesen umgebenden Außenmantel (8), wobei
der Außenmantel (8) aus einzelnen, unmittelbar aneinander angrenzenden Mantelabschnitten (10) gebildet ist und die einzelnen Mantelabschnitte (10) des Außenmantels (8) in einem kontinuierlichen Formgebungsverfahren mittels einer entlang einer Teilungsebene geteilten Werkzeugform (24) sukzessive durch ein Umgeben des Leitungskerns (6) mit einer erstarrbaren plastischen Masse (30) ausgebildet werden, wobei in zumindest einem Teilabschnitt (14) der Außenmantel (8) mit einer in Leitungslängsrichtung (4) veränderlichen Querschnittsgeometrie erzeugt wird, wobei zur Ausbildung des Außenmantels (8) die plastische Masse (30) in die Werkzeugform eingebracht (24) wird, die ein Formgebungsmodul (26) aufweist, welches entlang einer Teilungsebene teilbar ist welches ein Formgebungsnest (38) mit einer in Leitungslängsrichtung (4) variierenden Querschnittsgeometrie aufweist, zur Ausbildung des Teilabschnitts (14) mit entsprechend variierender Querschnittsgeometrie, wobei der Außenmantel (8) mittels der Werkzeugform (24) in einem modifizierten Extrusionsverfahren erzeugt wird, bei dem
- in einem Extrusionsschritt der Leitungskern (6) kontinuierlich durch das Formgebungsmodul (26) hindurchgeführt wird und ein Teilabschnitt (14) des Außenmantels (8) mit gleichbleibender Querschnittsgeometrie auf den Leitungskern (6) aufextrudiert wird und bei dem
- in einem anschließenden Endschritt die Förderung des Leitungskerns (6) gestoppt wird und der Leitungskern (6) innerhalb des Formgebungsmoduls (26) verharrt und die eingebrachte plastische Masse (30) in dem Formgebungsmodul (26) erstarrt.

2. Verfahren nach Anspruch 1,
**dadurch gekennzeichnet,**
**dass** das Formgebungsmodul (26) teilbar ist, dieses nach dem Aushärten getrennt wird und der mit dem Außenmantel (8) versehene Leitungskern (6) aus dem Formgebungsmodul (26) entnommen wird.

3. Verfahren nach einem der Ansprüche 1 oder 2,
**dadurch gekennzeichnet,**
**dass** das Formgebungsmodul (26) temperiert wird, wobei im Extrusionsschritt die plastische Masse (30) fließfähig gehalten wird und im Endschritt das Formgebungsmodul (26) aktiv gekühlt wird.

4. Verfahren nach einem der Ansprüche 1 bis 3,
**dadurch gekennzeichnet,**
**dass** das Formgebungsmodul (26) als ein Mundstück ausgebildet ist, dem ein Extrusionsdorn (46) vorgeschaltet ist, durch den wiederum der Leitungskern (6) geführt wird und wobei der Extrusionsdorn (46) in einem Materialverteiler (50) unter Ausbildung eines ringförmigen Hohlraums (52) aufgenommen ist, über den die plastische Masse (30) zugeführt wird.

5. Verfahren nach einem der Ansprüche 1 bis 4,
**dadurch gekennzeichnet,**
**dass** dem Formgebungsmodul (26) ein Kühlmodul (54) nachgeschaltet ist, mittels dessen während des Extrusionsschritts eine Kühlung der auf den Leitungskern (6) aufgebrachten Masse (30) erfolgt, wobei das Kühlmodul (54) bezüglich des Formgebungsmoduls (26) vorzugsweise thermisch isoliert ist und die beiden Module (26, 54) zumindest während des Extrusionsschritts unterschiedlich temperiert werden.

6. Werkzeugform (24) für ein Verfahren nach einem der Ansprüche 1 bis 5, mit einem als teilbare Extrusionsdüse ausgebildeten Formgebungsmodul (26), das ein Formnest (38) mit einer in Leitungslängsrichtung (4) variierenden Querschnittsgeometrie aufweist und eine Zuführungsöffnung (27A) zur Zuführung eines Leitungskerns (6).

## Claims

1. Method for producing a line (2) which extends in a line longitudinal direction (4) and which has a line core (6) and an outer shell (8) surrounding said line core, wherein
the outer shell (8) is formed from individual shell sections (10) which directly adjoin one another, and the individual shell sections (10) of the outer shell (8) are formed, in a continuous moulding process by means of a tool mould (24) which is divided along a dividing plane, in successive fashion by virtue of the line core (6) being surrounded with a solidifiable plastics compound (30), wherein, in at least one subsection (14), the outer shell (8) is produced with a cross-sectional geometry which varies in the line longitudinal direction (4), wherein, to form the outer shell (8), the plastics compound (30) is introduced into the tool mould (24), said tool mould having a moulding module (26) which can be divided along a dividing plane and which has a moulding cavity (38) with a cross-sectional geometry which varies in the line longitudinal direction (4) in order to form the subsection (14) with correspondingly varying cross-sectional geometry, wherein the outer shell (8) is produced by means of the tool mould (24) in a modified extrusion process, in which,
- in an extrusion step, the line core (6) is guided continuously through the moulding module (26) and a subsection (14) of the outer shell (8) with uniform cross-sectional geometry is extruded onto the line core (6), and in which,
- in a subsequent end step, the conveyance of the line core (6) is stopped, and the line core (6) remains within the moulding module (26) and the introduced plastics compound (30) solidifies in the moulding module (26).

2. Method according to Claim 1,
**characterized**
**in that** the moulding module (26) is divisible, said moulding module is separated after the hardening process, and the line core (6) provided with the outer shell (8) is removed from the moulding module (26) .

3. Method according to one of Claims 1 to 2,
**characterized**
**in that** the moulding module (26) is temperature-controlled, wherein, in the extrusion step, the plastics compound (30) is kept in a flowable state, and in the end step, the moulding module (26) is actively cooled.

4. Method according to one of Claims 1 to 3,
**characterized**
**in that** the moulding module (26) is formed as a mouth piece, upstream of which there is positioned an extrusion mandrel (46), through which in turn the line core (6) is guided, and wherein the extrusion mandrel (46) is received in a material distributor (50) so as to form an annular hollow chamber (52) via which the plastics compound (30) is fed.

5. Method according to one of Claims 1 to 4,
**characterized**
**in that** a cooling module (54) is positioned downstream of the moulding module (26), by means of which cooling module cooling of the compound (30) applied to the line core (6) is realized during the extrusion step, wherein the cooling module (54) is preferably thermally insulated with respect to the moulding module (26), and the two modules (26, 54) are temperature-controlled differently at least during the extrusion step.

6. Tool mould (24) for a method according to one of Claims 1 to 5, having a moulding module (26) which is formed as a divisible extrusion nozzle and which has a mould cavity (38) with a varying cross-sectional geometry that varies in the line longitudinal direction (4) and which has a feed opening (27A) for the feed of a line core (6).

## Revendications

1. Procédé de fabrication d'une ligne (2) s'étendant dans une direction longitudinale de ligne (4) et comprenant une âme de ligne (6) et une gaine extérieure (8) entourant celle-ci,
la gaine extérieure (8) étant formée de portions de gaine individuelles (10) directement adjacentes les unes aux autres et les portions de gaine individuelles (10) de la gaine extérieure (8) étant formées successivement dans un procédé de formage continu au moyen d'un moule d'outil (24), divisé le long d'un plan de division, en ce qu'une matière plastique solidifiable (30) est amenée autour de l'âme de ligne (6), la gaine extérieure (8) étant réalisée, dans au moins une portion (14), avec une géométrie en coupe transversale qui est variable dans la direction longitudinale (4) de la ligne, pour former la gaine extérieure (8), la matière plastique (30) étant introduite (24) dans le moule d'outil qui comporte un module de formage (26) qui est divisible le long d'un plan de division et qui comporte une cavité de formage (38) ayant une géométrie en coupe transversale qui varie dans la direction longitudinale (4), pour former la portion (14) ayant une géométrie en coupe transversale qui varie de manière correspondante, la gaine extérieure (8) étant produite au moyen du moule d'outil (24) dans un procédé d'extrusion modifié dans lequel
- dans une étape d'extrusion, l'âme de ligne (6) est passée en continu à travers le module de formage (26) et une portion (14) de la gaine extérieure (8) ayant une géométrie en coupe transversale constante est extrudée sur l'âme de ligne (6) et dans lequel
- dans une étape finale ultérieure, le transport de l'âme de ligne (6) est arrêté et l'âme de ligne (6) reste à l'intérieur du module de formage (26) et la matière plastique introduite (30) se solidifie dans le module de formage (26).

2. Procédé selon la revendication 1, **caractérisé en ce que** le module de formage (26) est divisible, celui-ci est séparé après durcissement et l'âme de ligne (6) pourvue de la gaine extérieure (8) est retirée du module de formage (26).

3. Procédé selon l'une des revendications 1 et 2, **caractérisé en ce que** le module de formage (26) est trempé, la matière plastique (30) étant maintenue fluide à l'étape d'extrusion et le module de formage (26) étant refroidi à l'étape finale.

4. Procédé selon l'une des revendications 1 à 3, **caractérisé en ce que** le module de formage (26) est conçu comme une embouchure en amont de laquelle est monté un mandrin d'extrusion (46) à travers lequel l'âme de ligne (6) est à son tour guidée et le mandrin d'extrusion (46) étant reçu dans un distributeur de matière (50) avec formation d'une cavité annulaire (52) par le biais de laquelle la matière plastique (30) est amenée.

5. Procédé selon l'une des revendications 1 à 4, **caractérisé en ce que** un module de refroidissement (54) est monté en aval du module de formage (26) et permet de refroidir la matière (30), appliquée sur l'âme de ligne (6), pendant l'étape d'extrusion, le module de refroidissement (54) étant de préférence isolé thermiquement par rapport au module de formage (26) et les deux modules (26, 54) étant trempés différemment au moins pendant l'étape d'extrusion.

6. Moule d'outil (24) destiné à un procédé selon l'une des revendications 1 à 5, ledit moule comprenant un module de formage (26) conçu comme une buse d'extrusion divisible qui comporte une cavité de moule (38), ayant une géométrie en coupe transversale qui varie dans la direction longitudinale (4) de la ligne, et comporte une ouverture d'amenée (27A) destinée à amener une âme de ligne (6).
